# EUROPÄISCHE PATENTSCHRIFT

(11) **EP 2 567 080 B1**
(45) Veröffentlichungstag und Bekanntmachung des Hinweises auf die Patenterteilung: **10.12.2014**
(21) Anmeldenummer: 11717998.6
(22) Anmeldetag: 26.04.2011
(51) Int. Cl.: F01N 3/20

(54) **BEHÄLTER MIT EINER ENTNAHMELEITUNG FÜR EINE BETRIEBSFLÜSSIGKEIT EINES KRAFTFAHRZEUGS**
CONTAINER HAVING A DISCHARGE LINE FOR AN OPERATING LIQUID OF A MOTOR VEHICLE
RÉCIPIENT PRÉSENTANT UN CONDUIT DE PRÉLÈVEMENT POUR UN LIQUIDE DE FONCTIONNEMENT D'UN VÉHICULE À MOTEUR

(30) Priorität: 07.05.2010 DE 102010019700
(43) Veröffentlichungstag der Anmeldung: 13.03.2013
(73) Patentinhaber: Emitec Gesellschaft für Emissionstechnologie mbH, 53797 Lohmar (DE)
(72) Erfinder: BRÜCK, Rolf, 51429 Bergisch Gladbach (DE); HODGSON, Jan, 53840 Troisdorf (DE); SCHEPERS, Sven, 53844 Troisdorf (DE)
(74) Vertreter: Rössler, Matthias
(86) Internationale Anmeldenummer: PCT/EP2011/056572
(87) Internationale Veröffentlichungsnummer: WO 2011/138191

(56) Entgegenhaltungen:
- EP-A1- 0 087 508
- EP-A2- 0 297 256
- DE-A1- 2 750 081
- DE-A1-102008 041 723
- DE-T2- 69 205 785
- US-A- 5 217 044

## Beschreibung

Die Erfindung betrifft einen Behälter für eine Betriebsflüssigkeit eines Kraftfahrzeugs. Derartige Behälter (sogenannte Tanks) werden in Kraftfahrzeugen beispielsweise zur Bevorratung von Kraftstoff für eine Verbrennungskraftmaschine, zur Bevorratung von Scheibenwischwasser, zur Bevorratung von Kühlflüssigkeit für eine Verbrennungskraftmaschine und/oder zur Bevorratung von Reduktionsmittel zur Zugabe in eine Abgasbehandlungsvorrichtung benötigt.

In letzter Zeit haben insbesondere Abgasbehandlungsvorrichtungen verstärkt Verbreitung gefunden, bei denen dem Abgas einer Verbrennungskraftmaschine ein Reduktionsmittel zugegeben wird, um bestimmte Schadstoffbestandteile des Abgases zu reduzieren. Hervorzuheben ist in diesem Zusammenhang ein Verfahren, das bereits vielfach in Abgasbehandlungsvorrichtungen angewendet wird, nämlich das Verfahren der selektiven katalytischen Reduktion [SCR = selective catalytic reduction]. Bei diesem Verfahren reagieren Stickoxidverbindungen im Abgas mit einem zugeführten Reduktionsmittel zu unschädlichen Substanzen wie Wasser, Kohlendioxid oder Stickstoff. Als Reduktionsmittel für das SCR-Verfahren wird häufig Ammoniak eingesetzt. Ammoniak ist ein Gefahrenstoff und wird daher in einem Kraftfahrzeug häufig nicht direkt bevorratet, sondern in Form eines Reduktionsmittelvorläufers. Ein derartiger Reduktionsmittelvorläufer ist beispielsweise eine flüssige Harnstoff-WasserLösung. Im Folgenden werden auch Reduktionsmittelvorläufer als Reduktionsmittel bezeichnet.

Zur Bevorratung einer derartigen wässrigen Lösung in einem Kraftfahrzeug ist ein Tank bzw. ein Behälter erforderlich. Darüber hinaus ist eine Vorrichtung zur Entnahme des Reduktionsmittels aus dem Tank bzw. Behälter sowie zur Bereitstellung des Reduktionsmittels in einer Abgasbehandlungsvorrichtung erforderlich. Diese Komponenten sollen möglichst kostengünstig, platzsparend und wartungsarm konstruiert sein. Darüber hinaus sollen die Variantenvielfalt solcher Behälter und der Ausgleich von Fertigungstoleranzen im Fokus der Erfindung stehen.

Die DE-T2-692 05 785 betrifft eine Vorrichtung zum Ansaugen von Brennstoff vom Boden eines Kraftstoffbehälters. Diese Vorrichtung hat eine Entnahmeleitung, durch die der Brennstoff angesaugt wird, und die sich von einer Tankoberseite zum Boden des Tanks erstreckt. Die Länge der Entnahmeleitung ist an den Abstand zwischen der Tankoberseite und den Boden anpassbar.

Die EP-A1-0 087 508 betrifft eine Saugvorrichtung für ein Brennstoffförderaggregat, mit welcher Brennstoff vom Boden eines Kraftstoffbehälters angesaugt werden kann. Die Saugvorrichtung erstreckt sich von dem Boden des Kraftstoffbehälters zu einer Oberseite des Kraftstoffbehälters uns sie weist einen Saugkopf mit einem Balg auf. Dieser Balg ermöglicht es, dass Saugkopf am Boden des Kraftstoffbehälters anliegt.

Die DE-A1-27 50 081 betrifft ein Brennstoffförderaggregat, welches am Boden eines Tanks angeordnet ist und Kraftstoff aus dem Tank durch eine Leitung fördern kann, welche sich durch eine Oberseite des Tanks erstreckt. Die Länge der Leitung ist mit einem elastischen Balg anpassbar.

Die US-A-5 217 044 betrifft eine Saugleitung zur Montage innerhalb eines Tanks. Die Saugleitung hat einen flexiblen Balg mit dem die Länge der Saugleitung an die Tankgröße anpassbar ist.

Hiervon ausgehend ist es Aufgabe der hier behandelten Erfindung, die mit Bezug auf den Stand der Technik geschilderten Probleme zumindest teilweise zu lindern, und insbesondere einen besonders vorteilhaften Behälter für eine Betriebsflüssigkeit eines Kraftfahrzeugs und insbesondere für ein Reduktionsmittel zur Abgasbehandlung vorzuschlagen. Darüber hinaus soll ein Verfahren zur Herstellung eines solchen Behälters beschrieben werden.

Diese Aufgaben werden gelöst mit einem Behälter gemäß den Merkmalen des Patentanspruches 1 und einem Verfahren gemäß den Merkmalen des Patentanspruches 6. Weitere vorteilhafte Ausgestaltungen des Behälters und des Verfahrens sind in den abhängig formulierten Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Die Erfindung betrifft einen Behälter für eine Betriebsflüssigkeit eines Kraftfahrzeugs, aufweisend eine Behälterwand, die einen Innenraum des Behälters begrenzt, mit einem ersten Wandabschnitt und einem zweiten Wandabschnitt und zumindest einer Entnahmeleitung zur Entnahme von Betriebsflüssigkeit aus dem Behälter mit einer Länge, wobei sich die Entnahmeleitung von dem ersten Wandabschnitt zu dem zweiten Wandabschnitt erstreckt und die Länge an einen Abstand zwischen dem ersten Wandabschnitt und dem zweiten Wandabschnitt anpassbar ist, wobei im Bereich des ersten Wandabschnittes eine erste Aufnahme zur Aufnahme der Entnahmeleitung und im Bereich des zweiten Wandabschnittes eine zweite Aufnahme zur Aufnahme der Entnahmeleitung angeordnet ist, und die erste Aufnahme und die zweite Aufnahme dazu eingerichtet sind, Kräfte von der Behälterwand auf die Entnahmeleitung zu übertragen und wobei eine angepasste Länge der Entnahmeleitung durch eine Fixierung gehalten ist, so dass die Entnahmeleitung den Behälter zwischen dem ersten Wandabschnitt und dem zweiten Wandabschnitt versteift.

Mit einer "Betriebsflüssigkeit" ist hier insbesondere ein (bei Raumtemperatur) flüssiges Reduktionsmittel und/oder ein (bei Raumtemperatur) flüssiger Reduktionsmittelvorläufer für eine Abgasbehandlungsvorrichtung in einem Kraftfahrzeug gemeint. Im Übrigen kann der Behälter natürlich insbesondere für die eingangs aufgeführten Betriebsflüssigkeiten Verwendung finden.

Die Entnahme von flüssiger Betriebsflüssigkeit aus dem Behälter sollte in der Nähe eines Bodens des Behälters erfolgen, damit eine Entnahme von Betriebsflüssigkeit aus dem Behälter unabhängig vom Füllstand der Betriebsflüssigkeit im Behälter erfolgen kann. Eine Öffnung zur Entnahme von Betriebsflüssigkeit aus dem Behälter kann zudem an einer Oberseite des Behälters angeordnet sein, damit unabhängig vom Füllstand der Betriebsflüssigkeit im Behälter an der Öffnung kein unerwünschter Austritt von Betriebsflüssigkeit aus dem Behälter erfolgt. Die Betriebsflüssigkeit soll auch dann nicht austreten, wenn die Öffnung zur Entnahme von Betriebsflüssigkeit aus dem Behälter nicht verschlossen ist. Da so die Öffnung oberhalb der Entnahmestelle ist, ist eine Entnahmeleitung zur Entnahme von Betriebsflüssigkeit aus dem Behälter vorgesehen. Der erste Wandabschnitt ist dementsprechend bevorzugt in der Nähe eines Bodens bzw. in einem Boden des Behälters angeordnet. Der zweite Wandabschnitt ist vorzugsweise in der Nähe einer Oberseite bzw. in der Oberseite des Behälters angeordnet. Dadurch, dass sich die Entnahmeleitung von dem ersten Wandabschnitt zu dem zweiten Wandabschnitt erstreckt, kann dem Behälter in der Nähe des Bodens Betriebsflüssigkeit entnommen und durch eine an der Oberseite des Behälters angeordnete Öffnung aus dem Behälter hinausgefördert werden.

Es ist zum einen vorteilhaft für verschiedene Behälter für Betriebsflüssigkeit gleiche Entnahmeleitungen verwenden zu können. Dies wird hier dadurch erreicht, dass die Länge der Entnahmeleitung an einen Abstand zwischen einem ersten Wandabschnitt und einem zweiten Wandabschnitt des Behälters anpassbar ist. Verschiedene Abstände zwischen ersten Wandabschnitten und zweiten Wandabschnitten bei verschiedenen Behältern können so mit der (gleichen) Entnahmeleitung ausgeglichen werden. Weiterhin können Behälter sich während des Betriebes beispielsweise infolge von Alterung verformen. Beispielsweise kann der Boden eines Behälters in Folge von Kriechen des Behältermaterials absinken. Dies würde dazu führen, dass eine (unveränderliche bzw. starre) Entnahmeleitung den Boden des Behälters dann nicht mehr erreicht. Hier erreicht die Erfindung zum Beispiel, dass sich die Länge der Entnahmeleitung an die altersbedingte Verformung des Behälters anpasst. Durch die Anpassbarkeit der Länge der Entnahmeleitung an einen Abstand zwischen dem ersten Wandabschnitt und dem zweiten Wandabschnitt wird auch ermöglicht, dass die Entnahme von Betriebsflüssigkeit durch die Entnahmeleitung auch bei einer Veränderung des Abstandes des ersten Wandabschnittes und des zweiten Abschnittes im späteren Betrieb weiter in unmittelbarer Nähe des ersten Wandabschnittes erfolgen kann.

Weiter ist der Behälter vorteilhaft, wenn im Bereich des ersten Wandabschnittes eine erste Aufnahme zur Aufnahme der Entnahmeleitung und im Bereich des zweiten Wandabschnittes eine zweite Aufnahme zur Aufnahme der Entnahmeleitung angeordnet ist, und die erste Aufnahme und die zweite Aufnahme dazu eingerichtet sind, Kräfte von der Behälterwand auf die Entnahmeleitung zu übertragen. Die erste Aufnahme und die zweite Aufnahme an der Behälterwand können so ausgebildet sein, dass entsprechende Aufnahmeabschnitte an der Entnahmeleitung formschlüssig und/oder kraftschlüssig mit der Behälterwand verbunden sind. Zur Veränderung der Länge der Entnahmeleitung sind Kräfte erforderlich.

Die erste Aufnahme und die zweite Aufnahme können dazu eingerichtet sein, diese Kräfte zur Veränderung der Länge der Entnahmeleitung (direkt und/oder selbstständig und/oder während des Betriebes) auf die Entnahmeleitung zu übertragen. Zum anderen kann die angepasste Länge der Entnahmeleitung durch eine Fixierung gehalten sein.

Zudem kann die Länge der Entnahmeleitung z. B. (nur) bei der Montage des Behälters angepasst werden. Nach der Montage erfolgt eine (zusätzliche) Fixierung der Länge der Entnahmeleitung. Die Länge der Entnahmeleitung ist daher bei dieser Variante im Betrieb des Behälters nicht mehr anpassbar.

Das in seiner Länge angepasste Entnahmerohr kann dann auch Kräfte von dem ersten Wandabschnitt auf den zweiten Wandabschnitt übertragen. So kann zusätzlich eine Versteifung des Behälters erreicht werden.

Außerdem ist die (mindestens eine) Entnahmeleitung so für Behälter mit unterschiedlichen Geometrien und unterschiedlichen Abständen zwischen ersten Wandabschnitten und zweiten Wandabschnitten geeignet.

Die erste Aufnahme und die zweite Aufnahme sind so gestaltet, dass zumindest axiale Kräfte entlang der Entnahmeleitung und/oder Querkräfte schräg (insbesondere senkrecht) zur Entnahmeleitung von der Entnahmeleitung auf den ersten Wandabschnitt bzw. den zweiten Wandabschnitt und umgekehrt übertragbar sind. Wenn die erste Aufnahme und die zweite Aufnahme axiale Kräfte aufnehmen können, ermöglicht das insbesondere eine Fixierung bzw. Ausrichtung des ersten Wandabschnittes und des zweiten Wandabschnittes zueinander. Wenn die erste Aufnahme und die zweite Aufnahme Querkräfte aufnehmen können, ermöglicht das insbesondere eine präzise Positionierung des Entnahmerohrs im Tank.

Weiterhin wird als vorteilhaft angesehen, dass die Behälterwand aus Kunststoff und die Entnahmeleitung aus Metall ausgeführt sind. Damit ist insbesondere gemeint, dass die Hauptbestandteile jeweils Kunststoff bzw. Metall sind. Der Behälter ist vorzugsweise mit einem Spritzgussverfahren hergestellt. Weitere mögliche Herstellungsverfahren für den Behälter sind das Blasverfahren oder das Rotationsschmelzverfahren. Bei dem Blasverfahren wird der Kunststoff für den Behälter durch Luftdruck an eine Hohlform angepasst, so dass sich die Behälterwand ausbildet. Bei dem Rotationsschmelzverfahren wird geschmolzener Kunststoff durch Zentrifugalkräfte an eine Hohlform angepasst, so dass sich die Behälterwand ausbildet. Mit einem solchen Verfahren kann kostengünstig ein besonders leichter Behälter hergestellt werden, der den Innenraum gegenüber dem Außenraum thermisch zumindest teilweise isoliert. Die Form eines solchen Behälters kann darüber hinaus in vorteilhafter Weise an den im Kraftfahrzeug zur Verfügung stehenden Bauraum angepasst sein. Die mit Metall ausgeführte Entnahmeleitung kann auch zielgerichtet Wärme in den Innenraum des Behälters einleiten. Gleichzeitig ist sie besonders stabil und kann verhältnismäßig große Kräfte aufnehmen.

Auch vorteilhaft ist der Behälter, wenn die Entnahmeleitung an der Behälterwand verriegelbar und entriegelbar angeordnet ist. Vorzugsweise kann die Entnahmeleitung von der Behälterwand wieder entfernt werden, ohne dass hierbei eine Beschädigung an der Behälterwand oder der Entnahmeleitung entsteht, welche den erneuten Einsatz gefährden würde. Auf diese Art und Weise kann die Entnahmeleitung einfach aus dem Behälter entfernt werden. Dies kann beispielsweise für Wartungsarbeiten oder Reinigungsarbeiten im Behälter vorteilhaft sein.

Weiterhin wird auch vorgeschlagen, dass die Entnahmeleitung zumindest einen gewellten Abschnitt aufweist, welcher zur Anpassung der Länge der Entnahmeleitung dient. Ein derartiger gewellter Abschnitt ist eine besonders einfache Möglichkeit, eine flexible Länge der Entnahmeleitung zu realisieren. Im Fall, dass die Entnahmeleitung verlängert werden soll, können die Falten des gewellten Abschnitts auseinandergezogen werden (Abstand der Falten vergrößert sich bei (regelmäßig) gleichzeitiger Reduzierung der Faltenhöhe). Entsprechend können die Falten des gewellten Abschnitts zusammengedrückt werden (Abstand der Falten verkleinert sich bei (regelmäßig) gleichzeitiger Vergrößerung der Faltenhöhe), wenn eine Verkürzung der Länge der Entnahmeleitung gewünscht ist. Folglich kann der gewellte Abschnitt ähnlich einem "formsteifen" Faltenbalg aufgebaut sein. Ein gewellter Abschnitt kann bei einer metallischen Entnahmeleitung vorgesehen sein.

Zusätzlich oder alternativ zu einer Wellung kann auch eine gegenüber anderen Abschnitten der Entnahmeleitung dünnere Wandstärke vorgesehen sein, um die Länge der Entnahmeleitung verändern zu können. Ebenso ist alternativ oder kumulativ möglich, dass wenigstens ein teleskopierbarer (oder ähnlich verformbarer) Abschnitt bei der Entnahmeleitung vorgesehen ist.

In einer weiteren Ausführungsvariante kann die Entnahmeleitung zumindest bereichsweise aus einem flexiblen Material gefertigt sein. Auch hierdurch wird die Länge der Entnahmeleitung anpassbar. Zudem ist möglich, dass die Entnahmeleitung zumindest bereichsweise eine Schleife, Schlaufe, Biegung oder dergleichen bildet. So kann eine erheblich höhere Flexibilität gegeben sein. Die Entnahmeleitung kann dann ihre Länge auch ohne eine signifikante lokale Verformung der Entnahmeleitung bzw. des Materials der Entnahmeleitung ändern.

Alternativ oder zusätzlich kann die Entnahmeleitung bereichsweise zumindest zwei parallel verlaufende Stränge aufweisen. Die Entnahmeleitung kann sich dabei vorzugsweise in zumindest zwei Stränge verzweigen. Außerhalb eines verzweigten Abschnittes mit zumindest zwei parallel verlaufenden Strängen ist die Entnahmeleitung vorzugsweise mit nur einem Strang ausgeführt. Gegebenenfalls können die zumindest zwei getrennten Stränge auch wieder zusammengeführt sein. Die einzelnen Stränge können mit einem geringeren Querschnitt ausgeführt sein, als die restliche Entnahmeleitung. Vorzugsweise entspricht der gemeinsame Querschnitt der zumindest zwei parallel verlaufenden Stränge dem Querschnitt der Entnahmeleitung außerhalb des verzweigten Abschnittes.

Gemäß einer Weiterbildung des Behälters wird vorgeschlagen, dass die Entnahmeleitung einen ersten Abschnitt mit einem ersten Durchmesser und einen zweiten Abschnitt mit einem zweiten Durchmesser aufweist, wobei der zweite Durchmesser größer ist als der erste Durchmesser, und wobei in dem zweiten Abschnitt eine Fördereinheit für die Betriebsflüssigkeit vorgesehen ist.

In die Entnahmeleitung ist dann insbesondere auch eine Fördervorrichtung zur Förderung von Betriebsflüssigkeit aus dem Behälter hinaus integriert. Anders formuliert bildet die Entnahmeleitung mit der Fördereinheit eine Baugruppe, die als Fördervorrichtung bezeichnet werden kann.

Das heißt mit anderen Worten auch, dass diese Ausgestaltung einen Behälter für eine Betriebsflüssigkeit für ein Kraftfahrzeug betrifft, aufweisend eine Behälterwand, die einen Innenraum des Behälters begrenzt mit einem ersten Wandabschnitt und einem zweiten Wandabschnitt und zumindest einer Entnahmeleitung zur Entnahme von Betriebsflüssigkeit aus dem Behälter mit einer Länge, wobei sich die Entnahmeleitung von dem ersten Wandabschnitt zu dem zweiten Wandabschnitt erstreckt und in der Nähe des zweiten Wandabschnittes ein Gehäuse an der Entnahmeleitung vorgesehen ist, in welchem sich eine Fördereinheit für die Betriebsflüssigkeit befindet, wobei die Länge der Entnahmeleitung im Bereich des Gehäuses und/oder benachbart dazu an einen Abstand zwischen dem ersten Wandabschnitt und dem zweiten Wandabschnitt anpassbar ist.

Das Gehäuse wird dabei vom dem zweiten Abschnitt mit dem zweiten Durchmesser gebildet. Das Gehäuse bzw. der zweite Abschnitt der Entnahmeleitung kann in seiner Länge bzw. in seiner Höhe veränderbar sein. Dies hat beispielsweise den Vorteil, dass das Gehäuse beziehungsweise der zweite Abschnitt sich nicht permanent im Nassbereich des Tanks befindet. Das Gehäuse beziehungsweise der zweite Abschnitt ist regelmäßig besonders weit oben im Tank angeordnet. Dort befindet sich nur Betriebsflüssigkeit, wenn der Tank relativ weit gefüllt ist. Ein flexibler Bereich ist somit nicht permanent der Betriebsflüssigkeit ausgesetzt. Hierdurch kann die Entnahmeleitung eine höhere Lebensdauer aufweisen. Zusätzlich wird die Veränderung der Form und der Länge der Entnahmeleitung durch den Strömungswiderstand der Betriebsflüssigkeit regelmäßig gedämpft. Diese Dämpfung ist reduziert, wenn der flexible Bereich sich nicht in der Betriebsflüssigkeit befindet.

Alternativ oder zusätzlich kann die Entnahmeleitung benachbart zu dem Gehäuse in der Länge veränderbar sein. Insgesamt sind folglich bevorzugt das Gehäuse und die Entnahmeleitung gemeinsam in ihrer Länge an einen Abstand zwischen dem ersten Wandabschnitt und dem zweiten Wandabschnitt anpassbar.

Gemäß einem weiteren Aspekt der Erfindung wird ein Verfahren zur Herstellung eines Behälters vorgeschlagen, welches zumindest die folgenden Schritte aufweist:
a) Bereitstellen eines Behälters mit einer Behälterwand ohne Entnahmeleitung;
b) Bereitstellen einer Entnahmeleitung mit einer veränderlichen Länge;
c) Fixieren der Entnahmeleitung an einem ersten Wandabschnitt der Behälterwand;
d) Anpassen der Länge der Entnahmeleitung an einen Abstand des ersten Wandabschnittes zu einem zweiten Wandabschnitt der Behälterwand; und
e) Fixieren der Entnahmeleitung an dem zweiten Wandabschnitt, wobei die Länge der Entnahmeleitung nach Schritt e) fixiert wird, so dass die Entnahmeleitung den Behälter zwischen dem ersten Wandabschnitt und dem zweiten Wandabschnitt versteift.

Das erfindungsgemäße Verfahren ermöglicht es, einheitliche Entnahmerohre für verschieden geformte Behälter zu verwenden.

Das Verfahren wird zumindest bei der Montage (insbesondere in der angegebenen Reihenfolge) durchgeführt, es kann dann aber (ggf. selbstständig) vollständig oder teilweise wiederholt werden. So kann zum Beispiel nachfolgend Schritt e) noch wenigstens einmal eine Wiederholung des Schrittes d) erfolgen - insbesondere, wenn sich bei der Montage bzw. im Einsatz des Behälters der Abstand der beiden Wandabschnitte zueinander ändert. Dann kann (bei Überschreiten einer vorgebbaren Kraft auf das Entnahmerohr) eine selbstständige Anpassung des Entnahmerohres ohne externe Wartungsarbeiten erfolgen.

Zudem wird die Länge der Entnahmeleitung nach Schritt e) (ggf. wieder lösbar) fixiert, so dass die Länge der Entnahmeleitung nicht mehr veränderlich ist. So kann erreicht werden, dass die Entnahmeleitung den Behälter zwischen dem ersten Randabschnitt und dem zweiten Wandabschnitt stärker versteift. Die Fixierung kann beispielsweise durch eine Klammer erfolgen, die einen flexiblen Abschnitt der Entnahmeleitung überbrückt und so versteift. Auch ist möglich, dass ein flexibler Abschnitt der Entnahmeleitung mit einem Zusatzmaterial umgossen und/oder umspritzt wird und so versteift wird.

Zudem kann auch vorgesehen sein, dass die Fixierung der Entnahmeleitung am ersten Wandabschnitt und/oder am zweiten Wandabschnitt nach Schritt e) nachbearbeitet wird. Dabei kann beispielsweise auch die Ausbildung einer nicht lösbaren, insbesondere einer stoffschlüssigen und/oder formschlüssigen Verbindung zwischen der Behälterwand und der Entnahmeleitung umfassen.

Die für das erfindungsgemäße Verfahren geschilderten besonderen Vorteile und Ausgestaltungen sind in analoger Weise auf den erfindungsgemäßen Behälter übertragbar. Gleiches gilt für die für den erfindungsgemäßen Behälter geschilderten besonderen Vorteile und Ausgestaltungen, die auf das erfindungsgemäße Verfahren anwendbar und übertragbar sind.

Weiterhin ist ein Kraftfahrzeug erfindungsgemäß, aufweisend zumindest einen erfindungsgemäßen Behälter, wobei eine Fördereinheit zur Förderung von Betriebsflüssigkeit aus dem Behälter über die zumindest eine Entnahmeleitung vorgesehen ist.

Ein derartiges Kraftfahrzeug weist vorzugsweise eine Verbrennungskraftmaschine und eine Abgasbehandlungsvorrichtung auf. Die Betriebsflüssigkeit ist vorzugsweise ein Reduktionsmittel oder ein Reduktionsmittelvorläufer, mit der in der Abgasbehandlungsvorrichtung das Verfahren der selektiven katalytischen Reduktion durchgeführt werden kann. Die Fördereinheit (Pumpe, Leitung, Ventil,...) ist dazu eingerichtet, die flüssige Betriebsflüssigkeit aus dem Behälter zu der Abgasbehandlungsvorrichtung zu fördern.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:
- Fig. 1:: eine erste Ausführungsvariante eines erfindungsgemäßen Behälters,
- Fig. 2:: eine zweite Ausführungsvariante eines erfindungsgemäßen Behälters,
- Fig. 3:: eine dritte Ausführungsvariante eines erfindungsgemäßen Behälters,
- Fig. 4:: eine vierte Ausführungsvariante eines erfindungsgemäßen Behälters,
- Fig. 5:: eine fünfte Ausführungsvariante eines erfindungsgemäßen Behälters,
- Fig. 6:: eine sechste Ausführungsvariante eines erfindungsgemäßen Behälters, und
- Fig. 7:: ein Kraftfahrzeug, aufweisend einen erfindungsgemäßen Behälter.

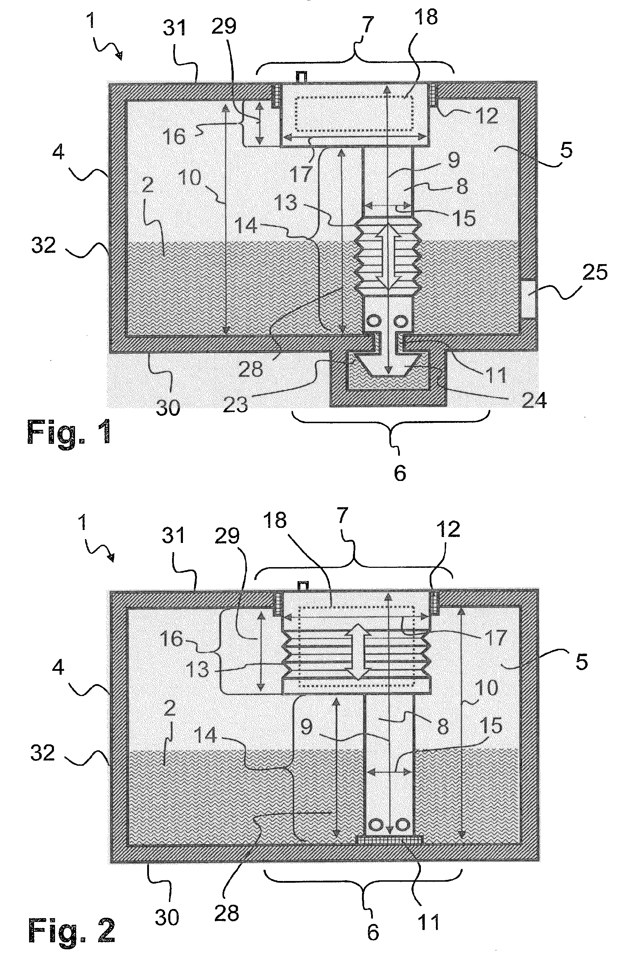

Die Fig. 1 bis 6 weisen viele mit den gleichen Bezugszeichen bezeichnete Komponenten auf und werden daher hier zunächst gemeinsam erläutert.

In den Fig. 1 bis 6 ist jeweils ein Behälter 1 für eine Betriebsflüssigkeit 2 dargestellt. Der Behälter 1 weist jeweils eine Behälterwand 4 auf, welche einen Innenraum 5 des Behälters 1 umschließt bzw. begrenzt und ein Sichtfenster 25 aufweisen kann. Von einem ersten Wandabschnitt 6 der Behälterwand 4 zu einem zweiten Wandabschnitt 7 der Behälterwand 4 erstreckt sich die Entnahmeleitung 8 durch den Innenraum 5 des Behälters. Der erste Wandabschnitt 6 hat zu dem zweiten Wandabschnitt 7 einen Abstand 10. Die Entnahmeleitung 8 hat eine Länge 9. Die Länge 9 entspricht im Wesentlichen dem ersten Abstand 10. Die Entnahmeleitung 8 hat einen ersten Abschnitt 14 und einen zweiten Abschnitt 16. Der erste Abschnitt 14 hat einen ersten Durchmesser 15 und der zweite Abschnitt 16 hat einen zweiten Durchmesser 17. Im Bereich des zweiten Durchmessers 17, welcher deutlich größer ist als der erste Durchmesser 15, befindet sich in der Entnahmeleitung 8 eine Fördereinheit 18 zur Förderung von Betriebsflüssigkeit 2 aus dem Behälter 1 hinaus. Der erste Abschnitt 14 hat eine erste Länge 28 und der zweite Abschnitt 16 hat eine zweite Länge 29. Vorzugsweise ist die erste Länge 28 zumindest doppelt so groß (und besonders bevorzugt mindestens vier mal so groß) wie die zweite Länge 29.

Am ersten Wandabschnitt 6 ist eine erste Aufnahme 11 zur Aufnahme der Entnahmeleitung 8 vorgesehen. Am zweiten Wandabschnitt 7 ist eine zweite Aufnahme 12 zur Aufnahme der Entnahmeleitung 8 vorgesehen.

Zur Anpassung der Länge 9 an den Abstand 10 hat die Entnahmeleitung 8 gemäß den Fig. 1 bis 4 einen gewellten Abschnitt 13.

Als näher spezifiziertes Detail ist in Fig. 1 die erste Aufnahme 11 dargestellt. Die erste Aufnahme 11 ist nach Art einer Nut 23 in der Behälterwand 4 ausgebildet. In die Nut 23 greift ein an der Entnahmeleitung 8 vorgesehener Anker 24 ein. Gemäß Fig. 1 ist der gewellte Abschnitt 13 im Bereich des ersten Abschnittes 14 der Entnahmeleitung 8 vorgesehen.

Gemäß Fig. 2 ist der gewellte Abschnitt 13 im zweiten Abschnitt 16 mit dem zweiten Durchmesser 17 und der zweiten Länge 29 der Entnahmeleitung 8 vorgesehen. In diesem Bereich bildet die Entnahmeleitung 8 ein Gehäuse für die Fördereinheit 18 aus. Die Fig. 2 stellt somit insbesondere ein umlaufend gewelltes Gehäuse dar, welches in seiner Länge bzw. Höhe anpassbar ist und so die Anpassbarkeit der Länge 9 der Entnahmeleitung 8 ermöglicht.

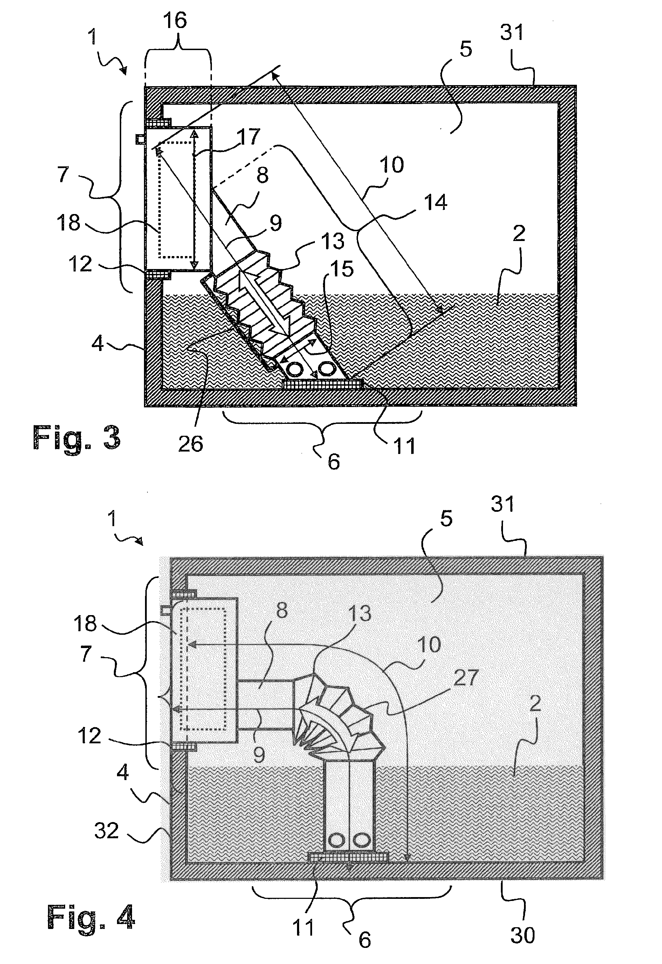

Während in Fig. 1 und Fig. 2 der erste Wandabschnitt 6 jeweils an einer Unterseite 30 des Behälters 1 und der zweite Wandabschnitt 7 an einer Oberseite 31 der Tankwand angeordnet ist, sind in Fig. 3 und Fig. 4 Behälter 1 dargestellt, bei denen der erste Wandabschnitt 6 jeweils an der Unterseite 30 des Behälters 1 angeordnet ist, während sich der zweite Wandabschnitt 7 jeweils an einer Seitenwand 32 des Behälters 1 befindet. Gemäß Fig. 3 erstreckt sich die Entnahmeleitung 8 schräg durch den Behälter 1. Darüber hinaus ist in Fig. 3 eine Fixierung 26 dargestellt, durch welche die Veränderbarkeit der Länge 9 der Entnahmeleitung 8 eingeschränkt wird. Die Entnahmeleitung 8 gemäß Fig. 3 versteift so den Behälter 1. Insbesondere weil die Entnahmeleitung 8 schräg im Behälter 1 angeordnet ist, schränkt die Entnahmeleitung 8 die Verformbarkeit des Behälters 1 bewusst besonders stark ein.

In Fig. 4 ist die Entnahmeleitung 8 mit einer Biegung 27 im gewellten Abschnitt 13 versehen. Der gewellte Abschnitt 13 ist hier so ausgeführt, dass die Entnahmeleitung 8 verbiegbar ist. Durch eine derartig ausgestaltete Entnahmeleitung 8 kann eine besonders flexible Anpassung der Entnahmeleitung 8 an unterschiedlich geformte Behälter 1 erfolgen.

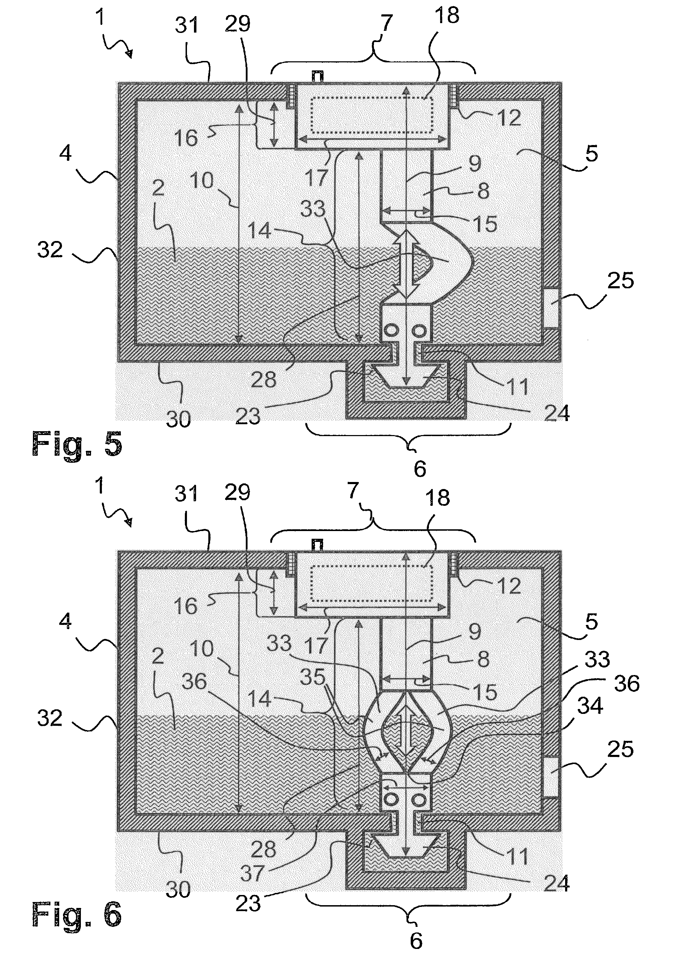

Die Fig. 5 und 6 zeigen andere Ausführungsformen der Entnahmeleitung 8, durch die eine Anpassung der Länge 9 auch ohne einen gewellten Abschnitt erreicht werden kann.

Die Entnahmeleitung 8 in dem Behälter 1 gemäß der Fig. 5 weist eine Schleife 33 auf, durch welche die Entnahmeleitung 8 ihre Flexibilität erhält. Durch eine derartige Schleife 33 kann die Entnahmeleitung 8 ihre Länge 9 verändern, ohne dass dazu eine starke lokale Verformung der Entnahmeleitung 8 und/oder des Materials der Entnahmeleitung 8 erforderlich ist.

Die Entnahmeleitung 8 in dem Behälter 1 gemäß der Fig. 6 weist eine Verzweigung 34 auf. Die Entnahmeleitung 8 ist bereichsweise in zwei parallele (getrennte) Stränge 35 verzweigt. Die einzelnen Stränge 35 weisen jeweils einen zweiten Querschnitt 36 auf, der geringer ist als der erste Querschnitt 37 der restlichen Entnahmeleitung 8. Beide Stränge 35 weisen zusätzlich eine Schleife 33 auf. So kann eine besonders gute Verformbarkeit der Entnahmeleitung 8 erreicht werden, so dass die Länge 9 veränderbar ist.

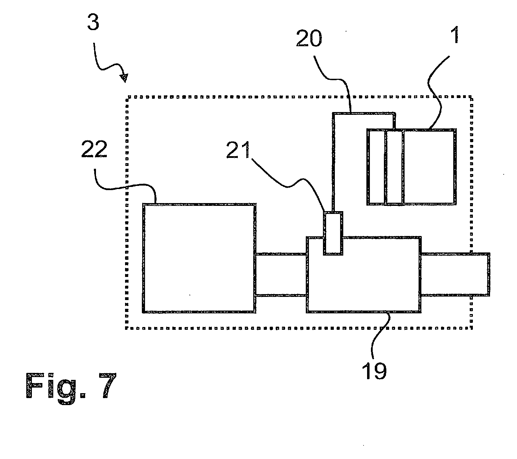

Fig. 7 zeigt ein Kraftfahrzeug 3, aufweisend eine Verbrennungskraftmaschine 22 und eine Abgasbehandlungsvorrichtung 19 zur Reinigung der Abgase der Verbrennungskraftmaschine 22. Die Abgasbehandlungsvorrichtung 19 weist einen Injektor 21 zur Zufuhr eines Reduktionsmittels auf. Der Injektor 21 wird über eine Leitung 20 aus einem Behälter 1 mit Reduktionsmittel versorgt.

### Bezugszeichenliste

- 1: Behälter
- 2: Betriebsflüssigkeit
- 3: Kraftfahrzeug
- 4: Behälterwand
- 5: Innenraum
- 6: erster Wandabschnitt
- 7: zweiter Wandabschnitt
- 8: Entnahmeleitung
- 9: Länge
- 10: Abstand
- 11: erste Aufnahme
- 12: zweite Aufnahme
- 13: gewellter Abschnitt
- 14: erster Abschnitt
- 15: erster Durchmesser
- 16: zweiter Abschnitt
- 17: zweiter Durchmesser
- 18: Fördereinheit
- 19: Abgasbehandlungsvorrichtung
- 20: Leitung
- 21: Injektor
- 22: Verbrennungskraftmaschine
- 23: Nut
- 24: Anker
- 25: Sichtfenster
- 26: Fixierung
- 27: Biegung
- 28: erste Länge
- 29: zweite Länge
- 30: Unterseite
- 31: Oberseite
- 32: Seitenwand
- 33: Schleife
- 34: Verzweigung
- 35: Strang
- 36: zweiter Querschnitt
- 37: erster Querschnitt

## Patentansprüche

1. Behälter (1) für eine Betriebsflüssigkeit (2) eines Kraftfahrzeugs (3), aufweisend eine Behälterwand (4), die einen Innenraum (5) des Behälters (1) begrenzt, mit einem ersten Wandabschnitt (6) und einem zweiten Wandabschnitt (7) und zumindest eine Entnahmeleitung (8) zur Entnahme von Betriebsflüssigkeit (2) aus dem Behälter (1) mit einer Länge (9), wobei sich die Entnahmeleitung (8) von dem ersten Wandabschnitt (6) zu dem zweiten Wandabschnitt (7) erstreckt und die Länge (9) der Entnahmeleitung (8) an einen Abstand (10) zwischen dem ersten Wandabschnitt (6) und dem zweiten Wandabschnitt (7) anpassbar ist, wobei im Bereich des ersten Wandabschnittes (6) eine erste Aufnahme (11) zur Aufnahme der Entnahmeleitung (8) und im Bereich des zweiten Wandabschnittes (7) eine zweite Aufnahme (12) zur Aufnahme der Entnahmeleitung (8) angeordnet ist, und die erste Aufnahme (11) und die zweite Aufnahme (12) dazu eingerichtet sind, Kräfte von der Behälterwand (4) auf die Entnahmeleitung (8) zu übertragen und wobei eine angepasste Länge (9) der Entnahmeleitung (8) durch eine Fixierung gehalten ist, so dass die Entnahmeleitung (8) den Behälter (1) zwischen dem ersten Wandabschnitt (6) und dem zweiten Wandabschnitt (7) versteift.

2. Behälter (1) nach Patentanspruch 1, wobei die Behälterwand (4) aus Kunststoff und die Entnahmeleitung (8) aus Metall ausgeführt sind.

3. Behälter (1) nach einem der vorhergehenden Patentansprüche, wobei die Entnahmeleitung (8) an der Behälterwand (4) verriegelbar und entriegelbar angeordnet ist.

4. Behälter (1) nach einem der vorhergehenden Patentansprüche, wobei die Entnahmeleitung (8) zumindest einen gewellten Abschnitt (13) aufweist, welcher zur Anpassung der Länge (9) der Entnahmeleitung (8) dient.

5. Behälter (1) nach einem der vorhergehenden Patentansprüche, wobei die Entnahmeleitung (8) einen ersten Abschnitt (14) mit einem ersten Durchmesser (15) und einen zweiten Abschnitt (16) mit einem zweiten Durchmesser (17) aufweist, wobei der zweite Durchmesser (17) größer ist als der erste Durchmesser (15), und wobei in dem zweiten Abschnitt (16) eine Fördereinheit (18) für die Betriebsflüssigkeit (2) vorgesehen ist.

6. Verfahren zur Herstellung eines Behälters (1), aufweisend zumindest die folgenden Schritte:
a) Bereitstellen eines Behälters (1) mit einer Behälterwand (4) ohne Entnahmeleitung (8);
b) Bereitstellen einer Entnahmeleitung (8) mit einer veränderlichen Länge (9);
c) Fixieren der Entnahmeleitung (8) an einem ersten Wandabschnitt (6) der Behälterwand (4);
d) Anpassen der Länge (9) der Entnahmeleitung (8) an einen Abstand (10) des ersten Wandabschnittes (6) zu einem zweiten Wandabschnitt (7) der Behälterwand (4); und
e) Fixieren der Entnahmeleitung (8) an dem zweiten Wandabschnitt (7),
wobei die Länge (9) der Entnahmeleitung (8) nach Schritt e) fixiert wird, so dass die Entnahmeleitung (8) den Behälter 1 zwischen dem ersten Wandabschnitt (6) und dem zweiten Wandabschnitt (7) versteift.

7. Kraftfahrzeug (3), aufweisend zumindest einen Behälter (1) für eine Betriebsflüssigkeit (2) nach einem der vorhergehenden Patentansprüche 1 bis 5, wobei eine Fördereinheit (18) zur Förderung von Betriebsflüssigkeit (2) aus dem Behälter (1) über die zumindest eine Entnahmeleitung (8) vorgesehen ist.

## Claims

1. Container (1) for an operating liquid (2) of a motor vehicle (3), having a container wall (4) which delimits an interior space (5) of the container (1), with a first wall section (6) and a second wall section (7), and having at least one discharge line (8) for discharging operating liquid (2) out of the container (1) with a length (9), the discharge line (8) extending from the first wall section (6) to the second wall section (7), and it being possible for the length (9) of the discharge line (8) to be adapted to a spacing (10) between the first wall section (6) and the second wall section (7), wherein a first receptacle (11) for receiving the discharge line (8) being arranged in the region of the first wall section (6) and a second receptacle (12) for receiving the discharge line (8) being arranged in the region of the second wall section (7), and the first receptacle (11) and the second receptacle (12) being set up for transmitting forces from the container wall (4) to the discharge line (8) and wherein an adapted length (9) of the discharge line (8) being maintained by a fixing means, so that the discharge line (8) stiffens the container (1) between the first wall section (6) and the second wall section (7).

2. Container (1) as claimed in claim 1, the container wall (4) being configured from plastic and the discharge line (8) being configured from metal.

3. Container (1) as claimed in one of the preceding claims, the discharge line (8) being arranged on the container wall (4) such that it can be locked and unlocked.

4. Container (1) as claimed in one of the preceding claims, the discharge line (8) having at least one corrugated section (13) which serves to adapt the length (9) of the discharge line (8).

5. Container (1) as claimed in one of the preceding claims, the discharge line (8) having a first section (14) with a first diameter (15) and a second section (16) with a second diameter (17), the second diameter (17) being larger than the first diameter (15), and a delivery unit (18) for the operating liquid (2) being provided in the second section (16).

6. Method for producing a container (1), having at least the following steps:
a) provision of a container (1) with a container wall (4) without discharge line (8);
b) provision of a discharge line (8) with a variable length (9);
c) fixing of the discharge line (8) on a first wall section (6) of the container wall (4);
d) adaptation of the length (9) of the discharge line (8) to a spacing (10) of the first wall section (6) from a second wall section (7) of the container wall (4); and
e) fixing of the discharge line (8) on the second wall section (7),
wherein the length (9) of the discharge line (8) is fixed after step e), so that the discharge line (8) stiffens the container (1) between the first wall section (6) and the second wall section (7).

7. Motor vehicle (3), having at least one container (1) for an operating liquid (2) as claimed in one of the preceding claims 1 to 5, wherein a delivery unit (18) is provided for conveying operating liquid (2) out of the container (1) via the at least one discharge line (8).

## Revendications

1. Récipient (1) pour un liquide de fonctionnement (2) d'un véhicule automobile (3), comprenant une paroi de récipient (4) qui limite un espace intérieur (5) du récipient (1), comprenant une première section de paroi (6) et une deuxième section de paroi (7) et au moins un conduit de prélèvement (8) pour prélever du liquide de fonctionnement (2) du récipient (1), présentant une longueur (9), le conduit de prélèvement (8) s'étendant à partir de la première section de paroi (6) jusqu'à la deuxième section de paroi (7) et la longueur (9) du conduit de prélèvement (8) pouvant être adaptée à une distance (10) entre la première section de paroi (6) et la deuxième section de paroi (7), un premier logement (11) pour recevoir le conduit de prélèvement (8) étant disposé dans la région de la première section de paroi (6) et un deuxième logement (12) pour recevoir le conduit de prélèvement (8) étant disposé dans la région de la deuxième section de paroi (7), et le premier logement (11) et le deuxième logement (12) étant conçus pour transmettre des forces de la paroi de récipient (4) au conduit de prélèvement (8), et une longueur adaptée (9) du conduit de prélèvement (8) étant maintenue au moyen d'une fixation, de sorte que le conduit de prélèvement (8) rigidifie le récipient (1) entre la première section de paroi (6) et la deuxième section de paroi (7).

2. Récipient (1) selon la revendication 1, dans lequel la paroi de récipient (4) est réalisée en plastique et le conduit de prélèvement (8) est réalisé en métal.

3. Récipient (1) selon l'une quelconque des revendications précédentes, dans lequel le conduit de prélèvement (8) est disposé de manière à pouvoir être verrouillé et déverrouillé sur la paroi de récipient (4).

4. Récipient (1) selon l'une quelconque des revendications précédentes, dans lequel le conduit de prélèvement (8) comprend au moins une section ondulée (13), laquelle sert à adapter la longueur (9) du conduit de prélèvement (8).

5. Récipient (1) selon l'une quelconque des revendications précédentes, dans lequel le conduit de prélèvement (8) comprend une première section (14) présentant un premier diamètre (15) et une deuxième section (16) présentant un deuxième diamètre (17), dans lequel le deuxième diamètre (17) est supérieur au premier diamètre (15), et dans lequel une unité de refoulement (18) pour le liquide de fonctionnement (2) est prévue dans la deuxième section (16).

6. Procédé de fabrication d'un récipient (1), comprenant au moins les étapes suivantes :
a) fourniture d'un récipient (1) avec une paroi de récipient (4) sans conduit de prélèvement (8) ;
b) fourniture d'un conduit de prélèvement (8) présentant une longueur modifiable (9) ;
c) fixation du conduit de prélèvement (8) à une première section de paroi (6) de la paroi de récipient (4) ;
d) adaptation de la longueur (9) du conduit de prélèvement (8) à une distance (10) de la première section de paroi (6) à une deuxième section de paroi (7) de la paroi de récipient (4); et
e) fixation du conduit de prélèvement (8) à la deuxième section de paroi (7),
la longueur (9) du conduit de prélèvement (8) étant fixée conformément à l'étape e), de sorte que le conduit de prélèvement (8) rigidifie le récipient (1) entre la première section de paroi (6) et la deuxième section de paroi (7).

7. Véhicule automobile (3), comprenant au moins un récipient (1) pour un liquide de fonctionnement (2) selon l'une quelconque des revendications précédentes 1 à 5, dans lequel une unité de refoulement (18) est prévue pour refouler du liquide de fonctionnement (2) à partir du récipient (1) par le biais de l'au moins un conduit de prélèvement (8).
